# FASCICULE DE BREVET EUROPEEN

(11) **EP 1 722 453 B1**
(45) Date de publication et mention de la délivrance du brevet: **20.03.2013**
(21) Numéro de dépôt: 06290668.0
(22) Date de dépôt: 24.04.2006
(51) Int. Cl.: H02G 3/12

(54) **Boîte d'encastrement**
Einbaudose
Flush mounted box

(30) Priorité: 10.05.2005 FR 0504681
(43) Date de publication de la demande: 15.11.2006
(73) Titulaire: Legrand France, 87000 Limoges (FR); Legrand SNC, 87000 Limoges (FR)
(72) Inventeur: Guitard, Julien, 87000 Limoges (FR); Mendez, Pascal, 87170 Isle (FR); Vergne, Raphaël, 87000 Limoges (FR)
(74) Mandataire: Lepelletier-Beaufond, François

(56) Documents cités:
- DE-U1- 29 622 171
- FR-A1- 2 670 625

## Description

### DOMAINE DE L'INVENTION

L'invention concerne de manière générale les boîtes d'encastrement pour appareils électriques dans une cloison sèche.

### ARRIERE PLAN TECHNOLOGIQUE

On sait que ce type de boîtes d'encastrement est assujetti à la cloison non pas par scellement mais par serrage mécanique.

On connaît notamment par le document FR 2 670 625 une boîte d'encastrement de ce type pourvue d'un corps comportant une paroi latérale et des oreilles en saillie vers l'extérieur disposées à une extrémité de la paroi latérale. Les oreilles s'étendent transversalement à la paroi latérale et sont destinées à venir au contact de la surface extérieure de la cloison pour le serrage de la boîte sur la cloison en coopération avec une patte de serrage. Cette patte est adaptée à pivoter au moyen d'une vis de commande entre une position rétractée dans un logement de la boîte ménagé dans la paroi latérale et une position sortie vers l'extérieur de la boîte. La patte de serrage est également susceptible d'être commandée, par la vis, en translation selon une direction axiale.

### OBJET DE L'INVENTION

L'invention vise à améliorer une telle boîte.

A cet effet, l'invention propose une boîte d'encastrement comportant un corps en matière plastique comportant un fond, une paroi latérale et deux oreilles, ladite paroi latérale se raccordant à une de ses extrémités audit fond et entourant ledit fond tandis qu'elle délimite une ouverture à l'opposé dudit fond, lesdites oreilles saillant vers l'extérieur et étant disposées à l'extrémité de ladite paroi latérale opposée audit fond ; une patte, pour serrer une cloison entre lesdites oreilles et ladite patte, présentant une position rétractée à l'intérieur dudit corps et une position sortie en saillie à l'extérieur dudit corps ; et une vis pour commander le passage de ladite patte de sa position rétractée à sa position sortie et son déplacement suivant la direction axiale dans sa position sortie, caractérisée en ce que chaque dite oreille est recourbée vers ladite paroi latérale en l'absence de sollicitations externes tandis qu'elle est adaptée à s'aplatir contre une surface par rapport à laquelle ladite boîte se déplace dans le sens de l'enfoncement.

Une fois la boîte enfoncée au travers de l'ouverture d'une cloison, les oreilles sont en contact avec la surface extérieure de la cloison par l'extrémité des oreilles. Au serrage de la patte, la boîte est déplacée dans le sens de l'enfoncement, vers la cloison, jusqu'à ce que les oreilles soient aplaties contre la surface de la cloison. Cela permet à l'opérateur de déterminer qu'il a effectué un serrage convenable des pattes.

Si la surface de la cloison n'est pas parfaitement plane, certaines oreilles s'aplatissent tandis que d'autres restent plus ou moins recourbées pour rattraper les irrégularités de la surface.

On notera que, dans la boîte antérieure susvisée, une fois celle-ci insérée, les oreilles sont déjà aplaties contre la surface extérieure de la cloison et ne peuvent donc fournir aucune information à l'opérateur ni permettre un rattrapage d'irrégularités.

Selon des caractéristiques de mise en oeuvre particulièrement simples et commodes tant à la fabrication qu'à l'utilisation :
- lesdites oreilles appartiennent à un bord saillant comportant, en outre desdites oreilles, une collerette bordant ladite ouverture ; et/ou
- chaque dite oreille est sensiblement triangulaire et présente une pointe libre arrondie ; et/ou
- chaque dite oreille présente une courbure localisée à sa racine ;
- ladite boîte comporte quatre oreilles régulièrement réparties angulairement ; et/ou
- ladite patte présente un moyeu en prise avec ladite vis, ledit corps comportant un logement au niveau dudit fond dans lequel ladite patte est située en position rétractée, ledit corps comportant en outre des moyens de guidage de ladite patte en position sortie vers ledit bord et inversement ; et éventuellement
- ladite boîte comporte quatre oreilles régulièrement réparties angulairement, ladite boîte comportant, en outre de ladite patte, de ladite vis et desdits moyens de guidage formant un premier ensemble de serrage, un deuxième ensemble de serrage semblable audit premier ensemble de serrage disposé à l'opposé dudit premier ensemble de serrage, chaque dite vis étant disposée angulairement entre deux dites oreilles respectives.

### BREVE DESCRIPTION DES DESSINS

Les caractéristiques et avantages de l'invention ressortiront de la description qui suit, donnée à titre d'exemple préféré, mais non limitatif, en référence aux dessins annexés, sur lesquels :
- la figure 1 est une vue en perspective d'une boîte d'encastrement selon l'invention, les pattes étant en position rétractée ;
- la figure 2 est une vue en perspective de l'arrière de la boîte de la figure 1 ;
- la figure 3 est une vue agrandie, en perspective, d'une fenêtre du logement de la boîte, la patte étant en position rétractée ;
- la figure 4 est une vue similaire à celle de la figure 1, la patte étant sortie et remontée vers le bord en saillie ;
- la figure 5 est une vue en plan de l'intérieur et du bord en saillie comportant les quatre oreilles ;
- la figure 6 est une vue agrandie du détail VI de la figure 5 ;

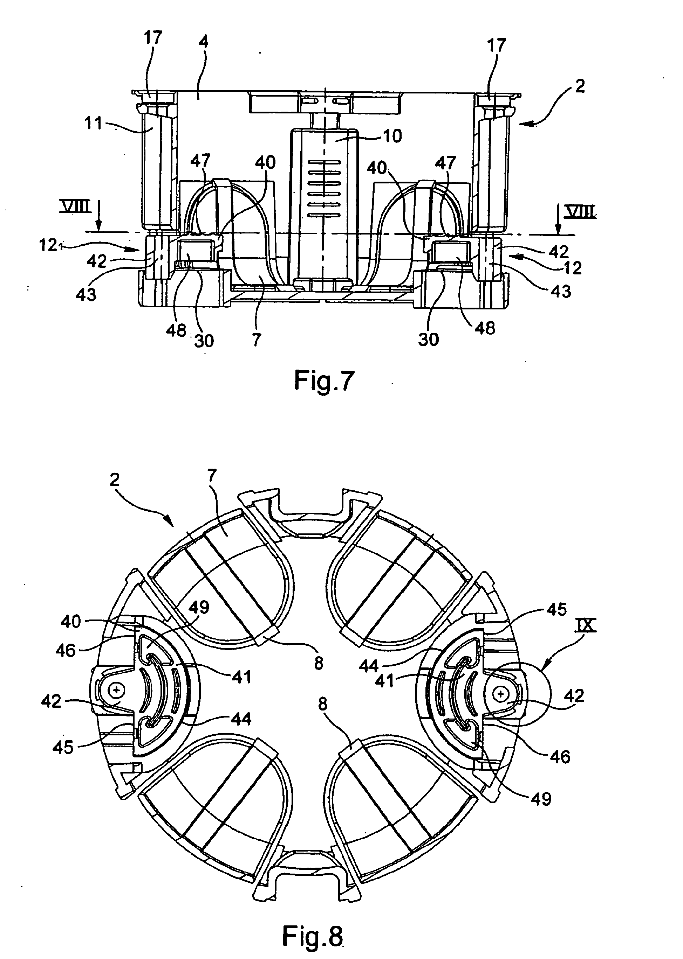

- la figure 7 est une vue en coupe de la boîte selon le plan repéré par VII-VII sur la figure 5 ;
- la figure 8 est une vue en coupe de la boîte selon le plan repéré par VIII-VIII sur la figure 7 ;
- la figure 9 est une vue agrandie du détail IX de la figure 8 ;
- la figure 10 est une vue en coupe du détail IX selon le plan repéré par X-X sur la figure 9 ;
- la figure 11 est une vue en coupe du détail VI selon le plan repéré par XI-XI sur la figure 6 ;
- la figure 12 est une vue similaire à celle de la figure 7 sur laquelle sont représentées les vis et la cloison dans laquelle la boîte est encastrée, les pattes et les oreilles serrant conjointement la cloison ;
- la figure 13 est une vue en élévation du corps de la boîte ;
- la figure 14 est une vue en élévation partielle du corps et de la cloison avant serrage, le contact entre le corps et la cloison se faisant au niveau de l'extrémité libre des oreilles ; et
- la figure 15 est une vue en élévation partielle du corps et de la cloison après serrage.

### DESCRIPTION DETAILLEE D'UN EXEMPLE DE REALISATION

La boîte d'encastrement 1 selon l'invention est destinée à accueillir un appareil électrique encastré dans une cloison sèche.

Elle comporte un corps 2 en matière plastique. Ce corps 2 comporte une paroi latérale 3 de forme globalement cylindrique, un fond 4 et une ouverture frontale opposée au fond 4. La paroi 3 présente un bord qui délimite l'ouverture. Ce bord comporte une collerette 5 qui s'étend transversalement à la paroi latérale 3, en saillie vers l'extérieur.

La collerette 5 est fine et déborde peu de la paroi latérale 3. En chacun de quatre emplacements régulièrement répartis angulairement sur la périphérie de la collerette 5, s'étend une oreille 6 appartenant au bord.

Chaque oreille 6 est sensiblement triangulaire et de même épaisseur que la collerette 5. Elle présente deux bords libres de même longueur et transversaux l'un par rapport à l'autre ainsi qu'une extrémité libre 9 formant pointe à l'écart de la paroi 3. L'angle existant entre les deux bords au niveau de l'extrémité 9 est arrondi.

Du fait de la répartition des oreilles 6 et de leur géométrie, les extrémités 9 forment les quatre coins d'un carré. En position encastrée de la boîte 1 et lorsqu'un appareil est disposé dans celle-ci, les oreilles 6 sont cachées derrière l'appareil présentant généralement une base de forme carrée de sorte qu'elles occupent une superficie maximale.

Alors que la collerette 5 est plate, les oreilles 6 sont légèrement recourbées vers le plan comportant le fond 4.

Chaque oreille 6 présente une racine 13 vers la jonction avec la collerette 5 et chaque oreille 6 présente une courbure au niveau de la racine 13. Les courbures sont telles que les oreilles 6 sont orientées vers l'extérieur et vers le fond 4.

La paroi latérale 3 et le fond 4 présentent des parties défonçables 7 permettant, après enlèvement de ces parties défonçables 7, la mise en place de conducteurs d'arrivée et de départ à relier à l'appareil électrique.

Les parties défonçables 7 comportent chacune deux portions sensiblement transversales l'une par rapport à l'autre, l'une des portions appartenant au fond 4 de la boîte 1, tandis que l'autre appartient à la paroi latérale 3. Chaque partie défonçable 7 est reliée par une zone sécable 8 au corps 2, l'une des zones sécables 8 reliant la partie défonçable 7 à la paroi latérale 3, l'autre zone sécable 8 reliant la partie défonçable 7 au fond 4.

Les zones sécables 8 sont en matière plastique, les parties défonçables 7 et le corps 2 étant moulés d'une pièce.

Les parties défonçables 7 et les découpes qui les accueillent sont ici de forme globalement ovale.

L'angle existant entre la paroi latérale 3 et le fond 4 au niveau de leur raccordement est arrondi de sorte que l'insertion de la boîte 1 dans la cloison est facilitée.

De manière connue en soi, la paroi latérale 3 porte sur sa surface intérieure deux surépaisseurs 10.

Chaque surépaisseur 10 est fine et allongée, percée de trois trous côte à côte. Ces trous sont destinés à accueillir une vis de montage de l'appareil électrique dans la boîte 1. Vers le fond 4, les trous traversent la paroi 3 et débouchent sur l'extérieur de celle-ci du fait qu'en cette zone, la paroi 3 n'est formée que de la surépaisseur 10.

Les deux surépaisseurs 10 sont positionnées diamétralement opposées.

Chaque surépaisseur 10 présente sur sa surface intérieure à la boîte 1 des petits crans destinés à la fixation d'un appareil électrique.

La paroi 3 comporte également, sur sa surface extérieure, deux renfoncements 11 diamétralement opposés. Les deux renfoncements 11 et les deux surépaisseurs 10 sont alternés et régulièrement répartis sur la paroi 3. Et chaque oreille 6 est placée entre une surépaisseur 10 et un renfoncement 11.

On décrit maintenant l'un quelconque des renfoncements 11.

Celui-ci est semi-cylindrique. Il s'étend selon une direction axiale qui correspond à la direction des génératrices de la paroi 3.

Le renfoncement 11 s'étend à partir de la collerette 5 en direction du fond 4. Vers le fond 4, le renfoncement 11 débouche sur l'une de deux fenêtres 12 que comporte la paroi 3. Du côté de la collerette 5, celui-ci se termine par un anneau dont le rayon intérieur est très inférieur à celui du renfoncement 11. L'ouverture centrale de l'anneau autorise le passage de la tige 15 d'une vis 16. Au dessus de cet anneau, la collerette 5 est ouverte sur un petit logement circulaire 17 permettant d'accueillir la tête de la vis 16. Ce logement circulaire 17 comporte, sensiblement dans le plan de la collerette 5, une petite saillie formant moyen d'encliquetage 19 pour la tête de la vis 16. Ainsi, une fois que la tige 15 est passée dans l'anneau et est accueillie dans le renfoncement 11 et que la tête est encliquetée dans son logement circulaire 17, la vis 16 est bloquée selon la direction axiale mais est toujours libre de pivoter sur elle-même.

La fenêtre 12 présente une forme sensiblement rectangulaire. Sa hauteur selon la direction axiale est très inférieure à la hauteur du renfoncement 11. La fenêtre 12 est centrée transversalement à la direction axiale sur la tige 15 de la vis 16. Une avancée rectangulaire 18 de la paroi 3 vient rétrécir la dimension transversale de la fenêtre du côté de la fenêtre 12 le plus proche de la collerette 5.

La fenêtre 12 comporte un bord 20 du côté du renfoncement 11, un bord 21 opposé au bord 20, un bord 22 en créneaux du côté de l'avancée 18 et un bord 23, droit, opposé au bord 22. Le bord 21 est à l'écart du plan comportant le fond 4.

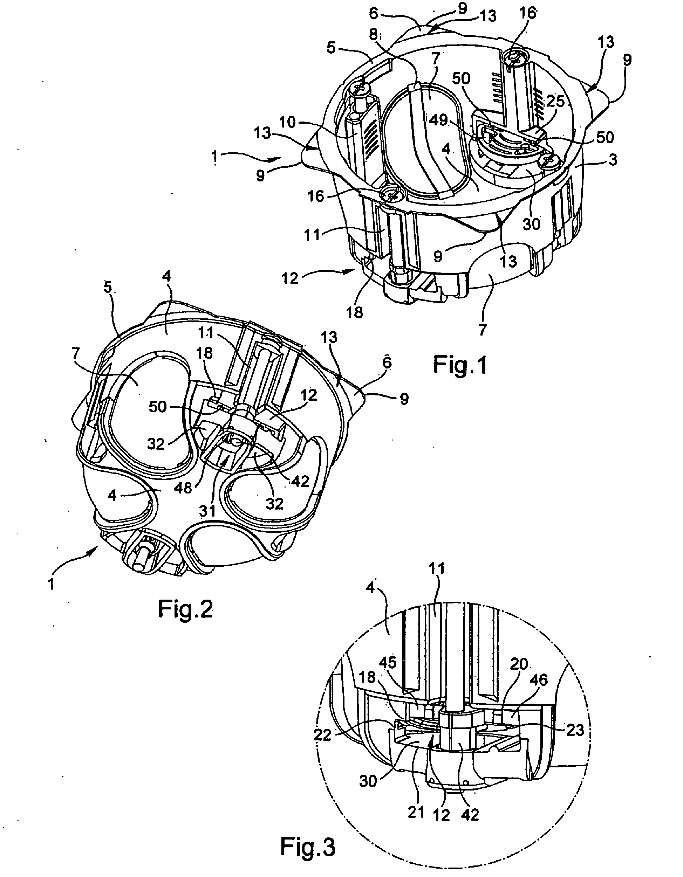

Comme on le voit sur la figure 2, sur sa surface intérieure, la paroi 3 présente, le long du bord 20, un rebord 25 en saillie.

Le rebord 25 s'étend transversalement à la paroi 3 vers l'intérieur sur une distance équivalente au rayon du renfoncement 11. Ainsi, le rebord 25 présente une portion de chaque côté du renfoncement 11. L'une de ces portions est plus longue que l'autre puisque le bord 20 n'est pas d'égale distance de part et d'autre du renfoncement 11 du fait de l'avancée 18.

Le fond 4 comporte deux marches semi-circulaires 30, chacune s'étendant devant l'une des fenêtres 12. Les bords périphériques des marches 30 sont en regard l'un de l'autre.

Chaque marche 30 atteint la hauteur du bord 21.

On décrit une quelconque des deux marches 30. Pour un observateur placé à l'intérieur du corps 2 et regardant vers le renfoncement 11, le plat de la marche 30 comporte deux zones latérales pleines et une zone centrale ouvrant sur un puits 31. La zone centrale s'étend de la fenêtre 12 jusqu'à la bordure périphérique.

Le puits 31 s'étend, selon la direction axiale, du bord 21 jusqu'au plan comportant le reste du fond 4.

Lorsque l'observateur est placé à l'extérieur et regarde l'arrière de la marche 30, se présentent le puits 31 et, de part et d'autre de ce puits 31, deux renfoncements 32 dont le fond correspond aux deux zones latérales. Ces renfoncements 32 sont délimités par une bordure épaisse qui, le long de la périphérie semi-circulaire, correspond sensiblement au rattrapage de hauteur entre le haut de la marche 30 et le reste du fond 4.

La tige 15 de la vis 16 a une longueur correspondant sensiblement à la distance entre la collerette 5 et le fond 4 de sorte que lorsque la tête est encliquetée dans son logement 17, l'extrémité libre de la tige 15 est située dans le puits 31 sans en dépasser.

La boîte 1 comporte également deux pattes de serrage 40 s'étendant principalement parallèlement au fond 4. Chaque patte 40 comporte une platine 41 en forme de secteur angulaire, globalement semi-cylindrique, légèrement plus petite que la marche 30. Les pattes 40 comportent également un bossage 42 présentant un moyeu 43 en son centre.

Le bossage 42 s'étend selon la direction axiale sur une longueur plus importante que l'épaisseur de la platine 41.

La platine 41 comporte un bord périphérique 44 et deux bords alignés 45, 46 s'étendant chacun du bossage 42 à l'une des extrémités du bord 44. Les bords 45, 46 sont alignés de part et d'autre du bossage 42.

Lorsqu'un observateur regarde la fenêtre 12 de l'extérieur de la boîte, il voit à travers cette fenêtre 12 le bord 46 entier. En revanche, il ne voit pas l'extrémité du bord 45 au contact du bord périphérique 43. En effet, cette extrémité est cachée derrière l'avancée 18.

La patte 40 présente d'un côté une surface 47 globalement plate présentant deux renfoncements 49 de part et d'autre d'une zone centrale.

La zone centrale comporte trois stries en saillie pour mieux agripper la surface intérieure de la cloison.

De l'autre côté, outre le bossage 42 faisant saillie, la platine 41 comporte une aile 48 selon la direction axiale se projetant du même côté du bossage 42.

L'aile 48 est positionnée au dos de la zone centrale et s'étend du bossage 42 jusqu'au bord périphérique 44 de la platine 41. Cette aile 48 est ici formée par une petite paroi en U en saillie par rapport à la platine 41.

De part et d'autre de l'aile 48 et au centre de celle-ci, la platine 41 présente des renfoncements. Ces trois renfoncements s'étendent au dos de la zone centrale. Au dos des renfoncements 49, la surface de la patte 40 est plate.

Les différents renfoncements permettent notamment une économie de matière plastique.

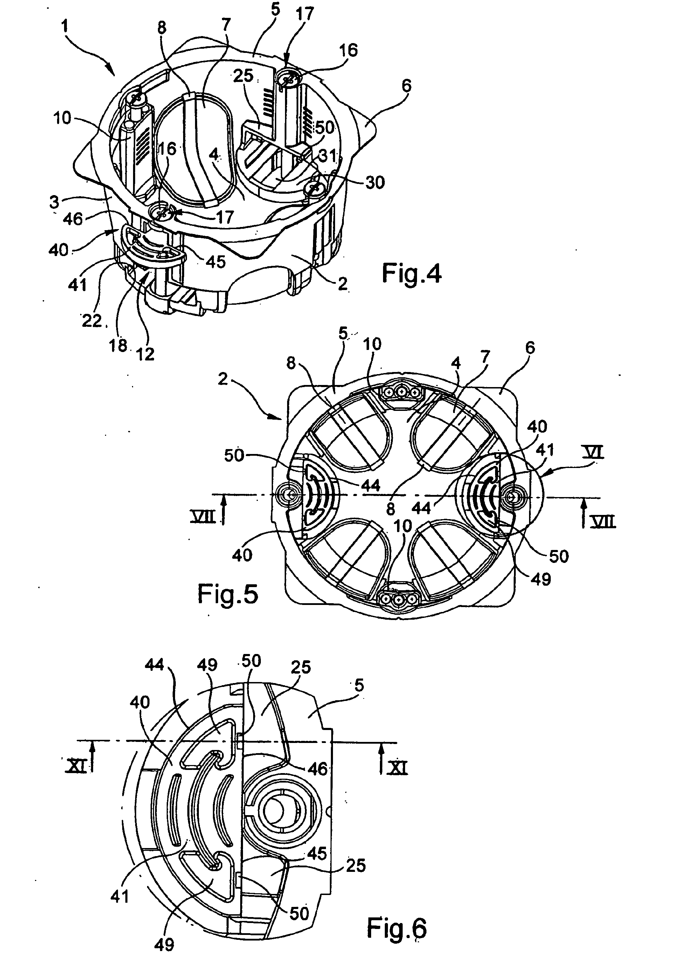

La patte 40 est reliée au corps 2 après le moulage par quatre liens sécables en matière plastique (figures 5, 10, 11). Deux liens 50 relient le rebord 25 de la fenêtre 12 respectivement au bord 45 et au bord 46 de la patte 40. La surface 47 de la patte 40 se trouve sensiblement dans le plan comportant le bord 20. Deux liens 51 relient l'extrémité libre du bossage 42 à la surface intérieure du puits 31, le bossage 42 rentrant légèrement dans le puits 31. Le sectionnement des liens est précisé ci-après.

Chaque moyeu 43 accueille la tige 15 de la vis 16 de sorte que la patte 40 est positionnée à une hauteur déterminée de la tige 15.

On décrit maintenant en détail l'utilisation des pattes dans une telle boîte d'encastrement.

Préalablement à l'utilisation des pattes 40, la boîte d'encastrement 1 est insérée dans une ouverture de la cloison 60. Cette cloison 60 comporte une surface extérieure et une surface intérieure. L'ouverture dans la cloison 60 est une ouverture circulaire dont le diamètre est tel que lors de l'enfoncement de la boîte 1, le corps 2 est enfoncé à travers cette ouverture mais la collerette 5 et les oreilles 6 restent du côté de la surface extérieure. Le contact entre la surface extérieure et le bord en saillie du corps 2 est alors limité au contact avec les extrémités 9 des oreilles 6. La collerette 5 est légèrement à l'écart du plan de la surface avant. Les oreilles 6 étant fines et recourbées, elles sont flexibles. Chaque oreille 6 dispose d'une liberté de pivotement de quelques degrés autour de sa racine 13.

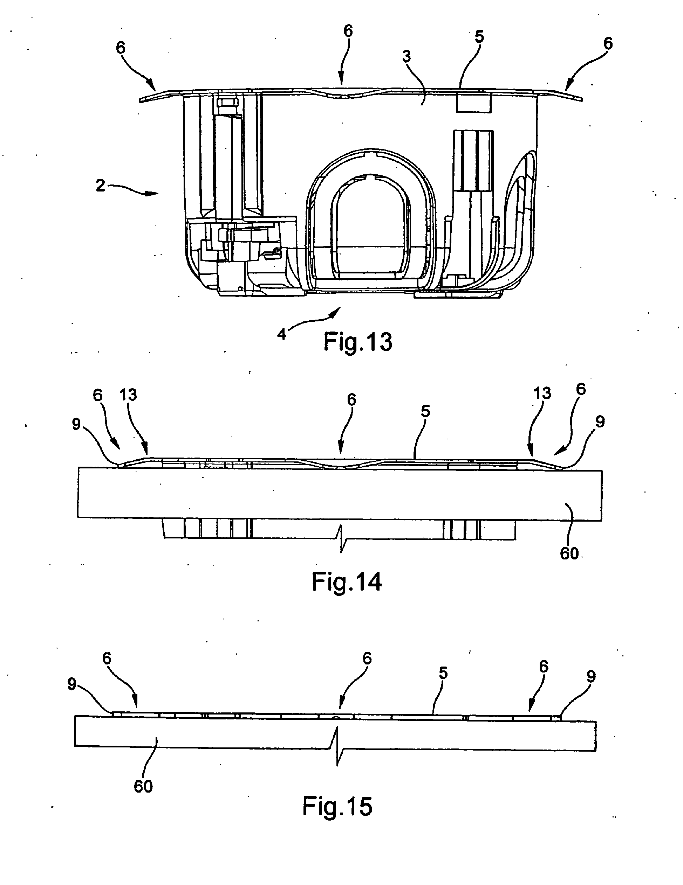

Ainsi, lorsque les pattes 40 viennent au contact de la surface intérieure de la cloison 60, comme on l'explique dans la suite, on continue à visser les pattes 40 de sorte que le serrage s'amplifie non pas par l'avancée des pattes 40 mais par l'aplatissement des oreilles 6 contre la surface avant. C'est-à-dire que les oreilles 6, qui étaient courbées vers le plan contenant le fond 4, sont alors aplaties dans le plan comportant la collerette 5 (figure 15). Les oreilles 6 épousent parfaitement la forme de la surface extérieure même si celle-ci présente quelques irrégularités.

Visuellement, l'utilisateur détecte le serrage suffisant des pattes lorsqu'il voit les oreilles 6 aplaties sur la cloison 60, contrairement aux boîtes connues dans lesquelles l'opérateur n'est pas informé. Dans ces boîtes, en continuant à serrer, la collerette 5 et les oreilles 6 se relèvent et risquent d'empêcher l'appareillage, que l'on souhaite disposer dans la boîte, d'être correctement plaqué contre la surface extérieure de la cloison.

Pour revenir à l'utilisation des pattes 40, lorsque les liens 50, 51 sont rompus, la patte 40 est mobile à pivotement autour de la tige 15 entre une position rétractée dans laquelle elle est positionnée dans le corps 2 au-dessus de la marche 30 et une position sortie dans laquelle elle a pivoté d'un demi-tour et se retrouve à l'extérieur de la boîte 1. Ce pivotement s'effectue avec celui de la vis 16 qui pivote également, la patte 40 étant, dans ces deux positions, située à une hauteur déterminée de la tige 16.

La patte 40 est également mobile à translation, principalement lorsqu'elle se trouve à l'extérieur du corps 2. Comme on le voit sur la figure 5, la patte 40 peut se déplacer vers une position plus haute sur la tige 15, à différents niveaux du renfoncement 11. Dans ce cas, la patte 40 subit une translation lorsque la tige 15 pivote.

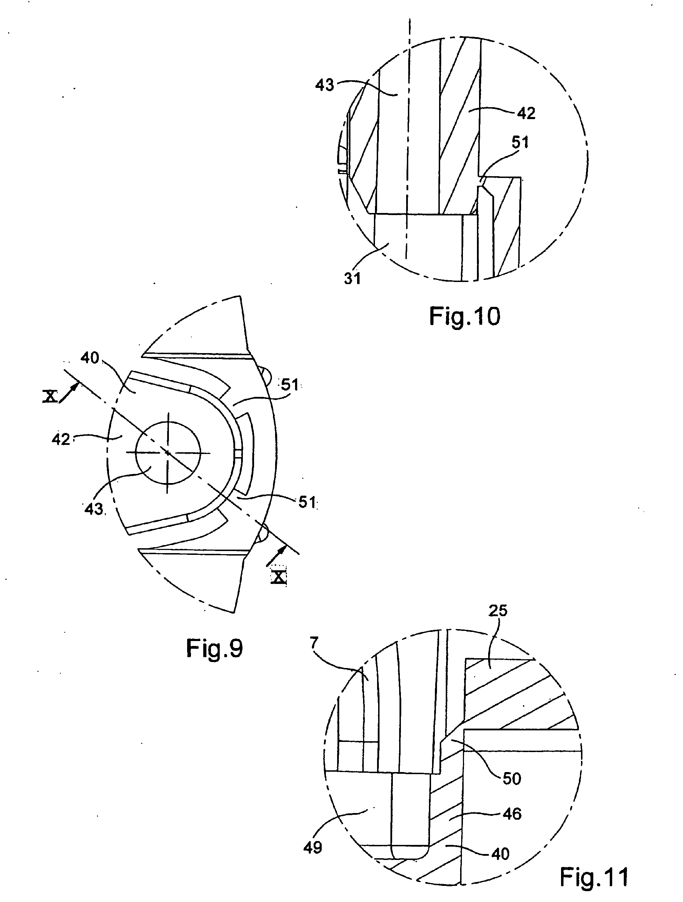

Comme on le voit sur la figure 2, à la première utilisation de la patte, en position rétractée initiale, la patte est reliée au corps 2 par les deux liens sécables 51 (figure 11) reliant l'extrémité libre du bossage 42 avec la paroi latérale du puits 31. Ces liens sécables 51 sont coupés par simple pivotement de la patte 30.

La patte 40 est initialement en position rétractée à l'intérieur de la boîte 1, avec la vis 16 positionnée dans le renfoncement 11 et traversant le moyeu 43 afin de pouvoir commander la patte 40. Cette patte 40 est dans sa position rétractée au droit de la fenêtre 12 et plus particulièrement au droit de la portion comprenant l'avancée 18.

La tête de la vis 16 étant encliquetée dans son logement à l'aide d'un tournevis, lorsqu'on fait tourner cette vis 16, la patte 30 et la vis 16 commencent leur pivotement autour de l'axe de la tige de la vis. Les liens 51 se rompent.

Du fait des dimensions de la fenêtre 12, un seul sens de rotation de la vis 16, premier sens de rotation, permet de faire saillir la patte 40 au travers de la fenêtre 12 ; ce sens permet, dans un premier temps, au bord 45 de s'éloigner de l'avancée 18.

En continuant à visser dans le premier sens, on fait passer l'intégralité de la platine 41 à travers la fenêtre 12.

Une fois que la platine 41 est entièrement à l'extérieur, le bord latéral 46 vient buter contre l'avancée 18. La patte 40 ne peut plus pivoter. Durant toute cette étape, la patte 40 est restée à une hauteur constante (selon la direction axiale).

En continuant à visser, la patte 40, dont le bord 46 est en butée, est contrainte de monter le long de la tige 15 de la vis 16. Du fait de sa position initiale du moyeu 43 (dans l'axe du renfoncement 11), celui-ci se trouve au contact du renfoncement 11. En continuant à monter le long de la vis 15, le moyeu 43 reste dans le renfoncement 11 et le bord latéral 46 est situé contre une portion de la paroi 3 proche du renfoncement 11. Le bord 46 continue de buter contre la paroi 3 tant que l'on continue le vissage de la vis 16.

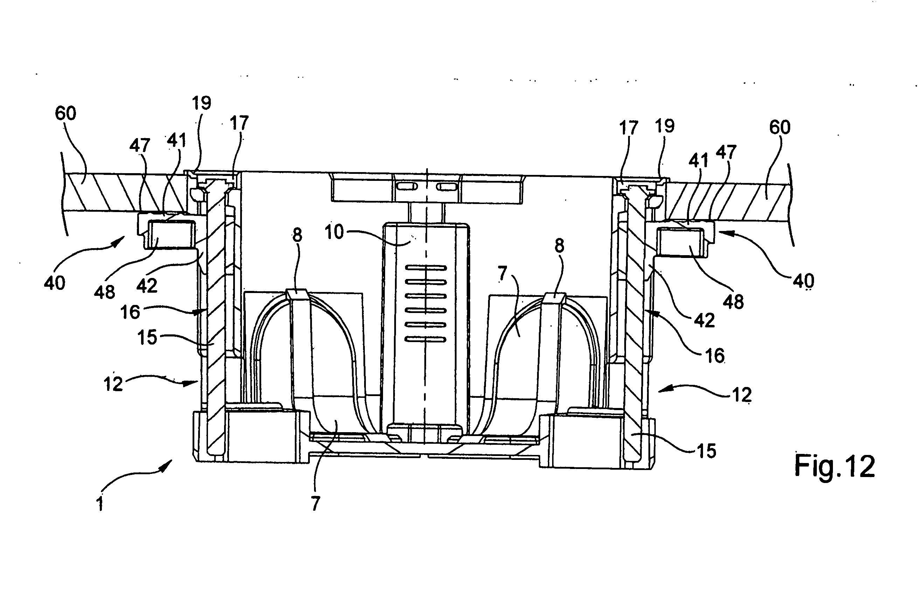

Ce vissage se poursuit jusqu'à ce que la patte 40 vienne en contact avec la surface intérieure de la paroi 60 dans laquelle on souhaite encastrer la boîte 1 (figure 12).

A partir de cette position, il est possible de faire redescendre la patte 40 toujours en utilisant un tournevis et en tournant la vis dans un deuxième sens de rotation.

De la même façon que la patte 40 était montée le long du renfoncement, elle descend vers la fenêtre 12.

Lors de cette descente, c'est le bord 45 qui vient en butée contre une portion de la paroi 3 adjacente au renfoncement 11 (de l'autre côté du renfoncement 11 par rapport à la montée).

Lorsque l'ensemble de la patte 40 est arrivé au droit de la fenêtre 12, la patte 40 cesse de descendre avec la rotation de la vis 16. Le bord 45 qui venait précédemment en butée ne trouve plus aucune résistance, la patte 40 ne fait que pivoter avec la vis 16.

Ainsi, lorsqu'on souhaite désencastrer la boîte 1, l'utilisateur peut visualiser la fin de la descente des pattes 40 puisque celles-ci arrivent dans l'intérieur du corps 2.

Le pivotement se fait jusqu'à ce que la patte soit en position rétractée et jusqu'à ce que ce bord 45 vienne buter sur la surface intérieure de l'avancée 18.

La patte 40 est en position rétractée, la manoeuvre peut s'arrêter. Toutefois, si l'on continue la rotation de la vis 16, la patte 40 étant en butée, celle-ci reprend sa descente le long de la vis 16.

Lorsque la patte 40 est entièrement en regard de la portion de la fenêtre 12 ne comportant pas d'avancée 18, le bord 45 ne trouve plus d'obstacle venant en butée.

Toutefois, dans sa descente au droit de la fenêtre 12, il est arrivé un moment où l'aile 48 est arrivée dans le puits 31. Dès lors, la patte 40 est bloquée en pivotement par l'aile 48 qui vient buter contre une paroi du puits 31. La patte 40 est bloquée dans sa translation vers l'extrémité libre de la tige 15 de sorte que la patte 40 est imperdable.

Lorsqu'on fait à nouveau pivoter la vis 16 dans le premier sens de rotation, l'aile 48 va venir en butée contre l'autre paroi du puits 31 forçant la patte 40 à remonter jusqu'à arriver à un niveau où l'aile 48 sort du puits 31. La patte 40 est alors en position rétractée.

Quelle que soit la position de la patte 40 sur la tige 16, cette patte 40 est toujours en butée contre un élément du corps 2 à l'exception de la hauteur unique à laquelle le passage à travers la fenêtre 12 est autorisé.

Du fait de ce passage à travers la fenêtre 12, la distance entre le moyeu 43 et le bord périphérique 44 de la patte 40 ne doit pas être supérieur à la distance entre le moyeu 43 et le bord 23. De par cette structure, une platine en forme de secteur angulaire, telle que la platine 41, avec un rayon adapté, permet d'obtenir une patte 40 avec la plus grande surface de serrage. En position de serrage de la cloison, les efforts de serrage sur la surface intérieure sont répartis sur la surface importante de la patte et les efforts sur la surface avant sont répartis sur les quatre oreilles 6, de sorte que le risque d'endommager la cloison est limité.

Selon une variante du mode de réalisation, les oreilles présentent une première portion du côté de leur racine orientée vers l'extérieur et à l'opposé du fond et une deuxième portion orientée vers l'extérieur et vers le fond de sorte qu'elles présentent un profil bombé.

Selon une autre variante du mode de réalisation, la collerette est discontinue, voire limitée aux seuls emplacements des oreilles.

De nombreuses autres variantes sont possibles en fonction des circonstances, notamment dans la constitution des pattes, qui peuvent par exemple être remplacées par une griffe en métal, voire dans les moyens de serrage, dans la constitution du logement ou du corps qui peut être par exemple dédoublé pour accueillir deux appareils électriques.

## Revendications

1. Boîte d'encastrement comportant :
- un corps (2) en matière plastique comportant un fond (4), une paroi latérale (3) et deux oreilles (6), ladite paroi latérale (3) se raccordant à une de ses extrémités audit fond (4) et entourant ledit fond (4) tandis qu'elle délimite une ouverture à l'opposé dudit fond (4), lesdites oreilles (6) saillant vers l'extérieur et étant disposées à l'extrémité de ladite paroi latérale (3) opposée audit fond (4) ;
- une patte (40), pour serrer une cloison (60) entre lesdites oreilles (6) et ladite patte (40), présentant une position rétractée à l'intérieur dudit corps (2) et une position sortie en saillie à l'extérieur dudit corps (2) ; et
- une vis (16) pour commander le passage de ladite patte (40) de sa position rétractée à sa position sortie et son déplacement suivant la direction axiale dans sa position sortie ;
**caractérisée en ce que** chaque dite oreille (6) est recourbée vers ladite paroi latérale (3) en l'absence de sollicitations externes tandis qu'elle est adaptée à s'aplatir contre une surface par rapport à laquelle ladite boîte (1) se déplace dans le sens de l'enfoncement.

2. Boîte selon la revendication 1, **caractérisée en ce que** lesdites oreilles (6) appartiennent à un bord saillant comportant, en outre desdites oreilles (6), une collerette (5) bordant ladite ouverture.

3. Boîte selon l'une quelconque des revendications 1 ou 2, **caractérisée en ce que** chaque dite oreille (6) est sensiblement triangulaire et présente une pointe (9) libre arrondie.

4. Boîte selon l'une quelconque des revendications 1 à 3, **caractérisée en ce que** chaque dite oreille (6) présente une courbure localisée à sa racine (13).

5. Boîte selon l'une quelconque des revendications précédentes, **caractérisée en ce qu'**elle comporte quatre oreilles (6) régulièrement réparties angulairement.

6. Boîte selon l'une quelconque des revendications précédentes, **caractérisée en ce que** ladite patte (40) présente un moyeu (43) en prise avec ladite vis (16), ledit corps (2) comportant un logement au niveau dudit fond (4) dans lequel ladite patte (40) est située en position rétractée, ledit corps (2) comportant en outre des moyens de guidage (11) de ladite patte (40) en position sortie vers ledit bord et inversement.

7. Boîte selon la revendication 6, **caractérisée en ce qu'**elle comporte quatre oreilles (6) régulièrement réparties angulairement, ladite boîte (1) comportant, en outre de ladite patte (40), de ladite vis (16) et desdits moyens de guidage (11) formant un premier ensemble de serrage, un deuxième ensemble de serrage semblable audit premier ensemble de serrage disposé à l'opposé dudit premier ensemble de serrage, chaque dite vis (16) étant disposée angulairement entre deux dites oreilles (6) respectives.

## Claims

1. A flush-mounting box comprising:
- a body (2) of plastic material comprising a bottom (4), a side wall (3) and two lugs (6), said side wall (3) being connected at one of its ends to the bottom (4) and surrounding said bottom (4) while it delimits an opening opposite to said bottom (4), said lugs (6) projecting outwardly and being disposed at the end of said side wall (3) that is opposite to said bottom (4);
- a leg (40) for clamping a partition (60) between said lugs (6) and said leg (40), having a retracted position in the interior of said body (2) and an extended position projecting to the exterior of said body (2); and
- a screw (16) for controlling the movement of said leg (40) from its retracted position to its extended position and its displacement in the axial direction in its extended position;
**characterised in that** each said lug (6) is curved towards said side wall (3) in the absence of external forces while it is adapted to flatten out against a surface with respect to which said box (1) is displaced in the direction of insertion movement.

2. A box according to claim 1 **characterised in that** said lugs (6) belong to a projecting edge comprising besides said lugs (6) a collar (5) bordering said opening.

3. A box according to either one of claims 1 and 2 **characterised in that** each said lug (6) is substantially triangular and has a free rounded point (9).

4. A box according to any one of claims 1 to 3 **characterised in that** each said lug (6) has a curvature located at its root (13).

5. A box according to any one of the preceding claims **characterised in that** it has four regularly angularly distributed lugs (6).

6. A box according to any one of the preceding claims **characterised in that** said leg (40) has a hub (43) engaged with said screw (16), said body (2) comprising a housing at the level of said bottom (4) in which said leg (40) is disposed in the retracted position, said body (2) further comprising guide means (11) for guiding said leg (40) in the extended position towards said edge and vice-versa.

7. A box according to claim 6 **characterised in that** it has four regularly angularly distributed lugs (6), said box (1) comprising besides said leg (40), said screw (16) and said guide means (11) forming a first clamping assembly, a second clamping assembly similar to said first clamping assembly and disposed opposite to said first clamping assembly, each said screw (16) being disposed angularly between two said respective lugs (6).

## Patentansprüche

1. Unterputzdose mit:
- einem Körper (2) aus Kunststoff mit einem Boden (4), einer Seitenwand (3) und zwei ohrenförmigen Flügeln (6), wobei die Seitenwand (3) an einem Ende mit dem Boden (4) verbunden ist und den Boden (4) umschließt, während sie dem Boden (4) entgegengesetzt eine Öffnung umgrenzt, wobei die ohrenförmigen Flügel (6) nach außen vorstehen und an dem dem Boden (4) entgegengesetzten Ende der Seitenwand (3) angeordnet sind;
- einer Lasche (40), um eine Wand (60) zwischen die ohrenförmigen Flügel (6) und die Lasche (40) zu klemmen, die eine in den Körper (2) eingefahrene Stellung und eine aus dem Körper (2) vorstehende ausgefahrene Stellung aufweist;
und
- einer Schraube (16), um den Übergang der Lasche (40) von der eingefahrenen Stellung zur ausgefahrenen Stellung und ihre Verlagerung in axialer Richtung in die ausgefahrene Stellung zu steuern;
**dadurch gekennzeichnet, dass** jeder ohrenförmige Flügel (6) bei nicht vorhandenen äußeren Beanspruchungen zur Seitenwand (3) gebogen ist, wohingegen er an eine Fläche gedrückt zu werden vermag, in Bezug auf welche die Dose (1) in der Einführungsrichtung bewegt wird.

2. Dose nach Anspruch 1,
**dadurch gekennzeichnet, dass** die ohrenförmigen Flügel (6) einem vorspringenden Rand zugehörig sind, der außer den ohrenförmigen Flügeln (6) einen die Öffnung umgebenden Kragen (5) umfasst.

3. Dose nach einem der Ansprüche 1 oder 2,
**dadurch gekennzeichnet, dass** jeder ohrenförmige Flügel (6) im Wesentlichen dreieckig ist und eine abgerundete freie Stelle (9) aufweist.

4. Dose nach einem der Ansprüche 1 bis 3,
**dadurch gekennzeichnet, dass** jeder ohrenförmige Flügel (6) eine an seiner Ansatzstelle (13) örtlich begrenzte Biegung hat.

5. Dose nach einem der vorhergehenden Ansprüche,
**dadurch gekennzeichnet, dass** sie vier ohrenförmige Flügel (6) umfasst, die winkelförmig gleichmäßig verteilt sind.

6. Dose nach einem der vorhergehenden Ansprüche,
**dadurch gekennzeichnet, dass** die Lasche (40) eine mit der Schraube (16) in Eingriff stehende Nabe (43) aufweist, wobei der Körper (2) in Höhe des Bodens (4) eine Aufnahme besitzt, in der die Lasche (40) in der eingefahrenen Stellung liegt, wobei der Körper (2) zudem Mittel (11) zum Führen der Lasche (40) in der ausgefahrenen Stellung in Richtung des Rands und umgekehrt aufweist.

7. Dose nach Anspruch 6,
**dadurch gekennzeichnet, dass** sie vier winkelförmig gleichmäßig verteilte ohrenförmige Flügel (6) umfasst, wobei die Dose (1) außer der Lasche (40), der Schraube (16) und den einen ersten Klemmsatz bildenden Führungsmitteln (11) einen dem ersten Klemmsatz ähnlichen zweiten Klemmsatz aufweist, der dem ersten Klemmsatz entgegengesetzt angeordnet ist, wobei jede Schraube (16) zwischen jeweils zwei ohrenförmigen Flügeln (6) winkelmäßig angeordnet ist.
